# EUROPEAN PATENT SPECIFICATION

(11) **EP 2 816 775 B1**
(45) Date of publication and mention of the grant of the patent: **28.03.2018**
(21) Application number: 13305854.5
(22) Date of filing: 21.06.2013
(51) Int. Cl.: H04L 12/26, H04L 29/06, G06F 15/173, G06F 9/50

(54) **SCALABLE ELASTIC CLOUD-BASED IMS SYSTEM AND METHOD**
SKALIERBARES, ELASTISCHES, CLOUD-BASIERTES IMS-SYSTEM UND VERFAHREN
SYSTÈME ET PROCÉDÉ IMS EN NUAGE EXTENSIBLE ET ÉVOLUTIF

(43) Date of publication of application: 24.12.2014
(73) Proprietor: ALCATEL LUCENT, 92100 Boulogne-Billancourt (FR)
(72) Inventor: Pianese, Fabio, 75014 Paris (FR); Janssens, Nico, 2580 Putte (BE)
(74) Representative: Nokia Bell Patent Attorneys

(56) References cited:
- US-A1- 2013 124 712
- HIDEYUKI SHIMONISHI ET AL: "Virtualized network infrastructure using OpenFlow", NETWORK OPERATIONS AND MANAGEMENT SYMPOSIUM WORKSHOPS (NOMS WKSPS), 2010 IEEE/IFIP, IEEE, PISCATAWAY, NJ, USA, 19 April 2010 (2010-04-19), pages 74-79, XP031690721, ISBN: 978-1-4244-6037-3
- JIANN-LIANG CHEN ET AL: "IMS cloud computing architecture for high-quality multimedia applications", WIRELESS COMMUNICATIONS AND MOBILE COMPUTING CONFERENCE (IWCMC), 2011 7TH INTERNATIONAL, IEEE, 4 July 2011 (2011-07-04), pages 1463-1468, XP031962182, DOI: 10.1109/IWCMC.2011.5982754 ISBN: 978-1-4244-9539-9

## Description

The present invention is related to a scalable elastic cloud-based IMS system and method.

A recent trend in the evolution of telecommunications systems has seen the replacement of functional elements implemented in hardware or as stand-alone machines with logical functions performed by software components. The current architecture of the phone system, based on the Internet Protocol Multimedia Subsystem (IMS) specification, specifies the logical interfaces and protocols for the interoperability of the separate software functions that cooperate to provide the required services. The IMS architecture has therefore 'virtualized' the entire phone system away from a particular hardware implementation.

However, the way IMS is currently implemented and managed still follows the standard practices of the telecommunications operators. While no longer strictly necessary, logical functions are still implemented and executed on separate hardware platforms, either independent machines or independent blades / cores on shared machines. The main reasons for this choice are the fear of unwanted interferences between different pieces of software and the habit of assigning individual machines to a well defined function.

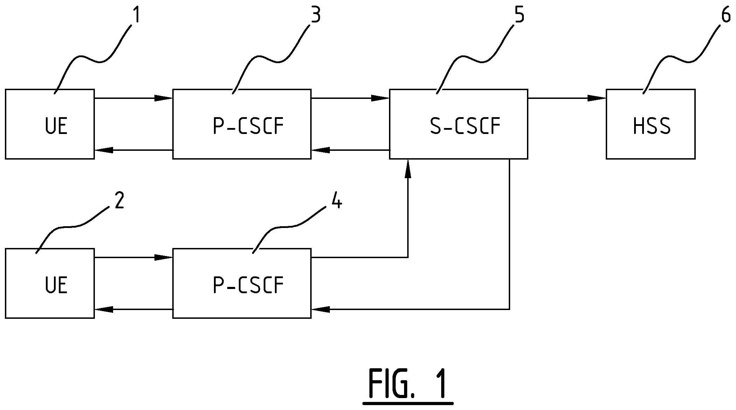

Figure 1 illustrates an exemplary embodiment of a prior art system. Hereinafter, the term "worker" will be used to denote a programmable logical entity that can run on networked computing resources on which an IMS function or service has been instantiated. For instance, a Proxy Call Session Control Function (P-CSCF) can be instantiated on a programmable logical entity thereby forming a P-CSCF worker.

Again referring to Figure 1, a P-CSCF and a Serving Call Session Control Function (S-CSCF) worker are deployed to support basic call establishment between two pieces of user equipment (UE).

Each UE 1, 2 registers itself via the P-CSCF worker 3, 4 with the S-CSCF worker 5, which stores the address of the UE into a data store (HSS - Home Subscriber Server) 6. When a caller initiates a session, its UE sends a request to the P-CSCF worker, which in turn forwards it to the S-CSCF to determine the location of the callee. Next, the request is forwarded again to the P-CSCF worker, which in turn transmits it to the callee.

When establishing a call between two UEs, the related SIP requests and responses follow the same fixed path. To be precise, call-stateful IMS servers such as P-CSCF, Interrogating Call Session Control Function (I-CSCF) and S-CSCF instances may mark messages with ROUTE and VIA headers to guarantee all (session) related requests and responses visit the same server instances - which are currently accommodating the affected session state. Although implementing such "sticky sessions" may have a number of advantages, it presents several disadvantages. For instance, when scaling back a cluster of call-stateful IMS workers, the control agent orchestrating this action must drive a worker to a safe execution state, where all ongoing sessions have been established or terminated, before it can safely shutdown that worker. This can be accomplished by waiting until a worker has completed all ongoing sessions, or by transferring the processing of ongoing sessions to other worker instances. In addition, when scaling out a cluster of call-stateful IMS workers, the new workers will only gradually be taken into use when new sessions are being established. This causes workloads getting out of balance, which in turn may cause a monitoring service to falsely conclude that the new worker is behaving incorrectly.

The papaer titled "Virtualized network infrastructure using OpenFlow", authored by Hideyuki Shimonishi; Shuji Ishii; and published on 19.4.2010, describes an architecture for virtualized network infrastructures, including an analysis of the four fundamental requirements, such as openness, virtualization, modularization, and programmability, and based on such requirements,the paper proposes an architecture and model for network OS. A drawback of the known solution is therefore that the networked computing resources are not used in an efficient manner. For instance, if in an IMS network not many user calls are placed, most resources will be idle whereas they could have been used to perform other tasks or released from the pool to reduce energy consumption and other variable costs.

It is therefore an object of the present invention to provide a system that offers a way to flexibly allocate the required functional components on dynamically-contracted computational resources.

To this end, the present invention provides, in a first aspect, an Internet Protocol Multimedia Subsystem (IMS) system in accordance with claim 1.

According to the invention, the IMS system comprises networked computing resources and a service code repository for storing code for implementing at least one network service, wherein the at least one network service comprises a state repository service which offers storage of a global state corresponding to a network function.

The IMS system further comprises a function code repository for storing code for implementing the network function, the network function being configured to use the state repository service to ensure global state sharing among instances of the same network function within the system.

In addition, the IMS system comprises a plurality of programmable logical entities that run on the networked computing resources, wherein each of the entities is either in an un-instantiated state, or in an instantiated state after code from the function code repository or service code repository has been deployed on it.

The IMS system further comprises a controller for maintaining a consistent view of the status of the instantiated logical entities and for determining a state of overall availability of the networked computing resources. The controller is further configured to deploy code from the function code repository and/or the service code repository on an un-instantiated programmable logical entity or to terminate and release an instantiated programmable logical entity.

The IMS system may further comprise a monitoring unit having a monitoring service to enable benchmarking the instantiated programmable logical entities, and an elasticity unit having an elasticity service to use the controller to modify a number of instantiated logical entities pertaining to the network function and/or network service based on input from the monitoring unit regarding that network function and/or network service.

If benchmarking indicates that only a few instances are available and that these instances are fully occupied or loaded, new functions and/or services can be instantiated.

A problem with existing systems is that a given IMS network function is required to remain active while the sessions it is handling are active. This is no longer desired as it prevents the equal distribution of load across the network and the timely reconfiguration of the IMS system.

However, if a new function or service is instantiated, it requires information to take over the ongoing sessions in which other functions or services are involved. To address this issue, the present invention proposes to use a state repository service which offers storage of a global state corresponding to a network function.

Global state is state information which needs to be shared among two or more of the instances of a function. It comprises state information that all instances need to access and/or modify (main configuration, cryptographic keys, etc.), state information that is shared among multiple of its instances, but not all of them (e.g. regional configuration, site-wide parameters, etc.). User session information belongs to this category. Other type of shared state may also be included in this definition. Different kinds of global state may require different degrees of consistency guarantees for the correct operation of the network function.

According to the invention, a newly instantiated network function will fetch the global state corresponding to that function from the state repository, allowing it to work in a similar manner as the already existing instances of this network functions.

It should be noted that a plurality of identical network functions may use the same state repository service to share a global state pertaining to this network function.

The monitoring unit may determine the load of a network function and/or network service. Furthermore, the elasticity unit can be configured to modify the number of instantiated logical entities pertaining to the network function and/or network service when the load is outside a predetermined operating range. The predetermined operating range may consist of an upper bound, above which the number of instantiated logical entities will be increased, and a lower bound, below which the number of instantiated logical entities will be decreased.

The elasticity unit may further be configured to take into account the state of availability of the networked computing resources obtained from the controller for determining whether to modify the number of instantiated logical entities. For instance, if no more resources are available, the number of instantiated logical entities cannot be increased. Similarly, if a lot of resources are available, the decision to increase the instantiated logical entities may be taken earlier. Similarly, the abovementioned operating range can be dependent on the state of availability.

The service code repository may comprise code for implementing the monitoring service and the elasticity service. Furthermore, the monitoring unit may comprise an instantiation of the monitoring service on a programmable logical entity and the elasticity unit may comprise an instantiation of the elasticity service on a programmable logical entity.

The IMS system may further comprise a prediction unit having a prediction service to forecast load surges of the network function and/or network service. In this case, the elasticity unit may be configured to modify the number of instantiated logical entities pertaining to the network function and/or network service based on output of the prediction service. The prediction service allows a preventive increase or decrease in the number of instantiated logical entities. For instance, this number may be increased before 0:00 AM on new years day.

The service code repository may comprise code for implementing the prediction service. Similar to the monitoring unit, the prediction unit may be an instantiation of the prediction service on a programmable logical entity.

The controller may comprise a database having stored therein the name of a network function and/or network service, and a corresponding address and status for each instantiated logical entity on which the network function and/or network has been instantiated. This database keeps track of which function or service is instantiated on which logical entity and which address information, such as an IP address or other network identifier, to use to access the function or service.

Read-only access to the database for other functions or services within the IMS system may be allowed using a lookup unit having a lookup service.

The function code repository and/or service code repository may comprise code for a plurality of network functions and/or network services, respectively. In this case, the elasticity unit may be configured to modify the number of the instantiated logical entities pertaining to each network function and/or network service individually based on input from the monitoring unit regarding that network function and/or network service. Accordingly, for some network functions or network services, the number of instantiations within the IMS system may increase whereas for other functions or services, the number may decrease, all depending on the load for those functions or services.

According to a second aspect, the present invention provides a method for elastically scaling an Internet Protocol Multimedia Subsystem (IMS) system.

The method according to the invention comprises the steps of:
providing networked computing resources;
storing code for implementing at least one network service in a service code repository, wherein the at least one network service comprises a state repository service which offers storage of a global state corresponding to a network function;
storing code for implementing at least one network function in a function code repository, the network function being configured to use the state repository service to ensure global state sharing among instances of the network function within the system;
providing a plurality of programmable logical entities that run on the networked computing resources, each of the entities being either in an un-instantiated state, or in an instantiated state after code from the function code repository or service code repository has been deployed on it;
maintaining a consistent view of the status of the instantiated logical entities and determining a state of overall availability of the networked computing resources; and
modifying a number of instantiated logical entities pertaining to the network function and/or network service by deploying code from the function code repository and/or the service code repository on an un-instantiated programmable logical entity or to terminate and release an instantiated programmable logical entity.

The method may further comprise benchmarking the instantiated programmable logical entities. In this case, the abovementioned modifying a number of instantiated logical entities pertaining to the network function and/or network service can be based on the benchmarking regarding that network function and/or network service.

According to a third aspect, the present invention provides an Internet Protocol Multimedia Subsystem (IMS) system package, comprising a computer-readable storage medium, wherein the medium comprises code to be deployed on a plurality of programmable logical entities that run on networked computing resources. Each of the entities is either in an un-instantiated state, or in an instantiated state after code has been deployed on it.

According to the invention, the storage medium comprises code for implementing at least one network service, wherein the at least one network service comprises a state repository service which offers storage of a global state corresponding to a network function. It further comprises code for implementing the network function, wherein the network function is configured to use the state repository service to ensure global state sharing among instances of the same network function within the system.

The medium also comprises code for implementing a controller service for maintaining a consistent view of the status of the instantiated logical entities and for determining a state of overall availability of the networked computing resources, wherein the controller service is further configured to deploy code on an un-instantiated programmable logical entity or to terminate and release an instantiated programmable logical entity.

The medium may also comprise code for implementing a monitoring service to enable benchmarking the instantiated programmable logical entities, and code for implementing an elasticity service that is configured to use the controller service to modify a number of instantiated logical entities pertaining to the network function and/or network service based on input from the monitoring unit regarding that network function and/or network service.

It should be appreciated by the skilled person that the package may comprise a plurality of different storage media over which the abovementioned code is distributed.

Next, the invention will be described in more detail referring to the drawings, wherein:
Figure 1 illustrates a call setup procedure according to a prior art embodiment;
Figure 2 illustrate the logical components of an embodiment of the system according to the invention; and
Figures 3 and 4 illustrate the execution of the call setup illustrated in figure 1 using an embodiment of the system according to the invention.

Schematically, every network function F(i) has a global state S(i) that determines the future behavior of said function in response to the network events it will receive from the other functions and/or from the users of the system. The global state S(i) must be shared among all instances of a same application, whereas some local state s(i) can also exist that does not need to be shared, as its absence might just result in recoverable faults taken into account by the ordinary protocol. Different network functions do not necessarily share a state, and may have different requirements about the level of consistency, availability, and maximum latency with which the global state must be accessible.

For every macroscopic transaction initiated by the users, e.g. the set-up of a video call or the delivery of a multimedia message, a workflow will unfold that will trigger a series of actions and state updates in a number of functions. User activity results in a variable degree of activity across the network functions, as determined by the complexity of processing and the details of the protocol that each function must implement. Differences among the role and the resource consumption of network functions determine a different scaling behavior of each function under an increasing user load.

The present invention discloses an architecture or system where a pool of networked resources M can be dynamically instantiated to run a desired number of workers W. A worker is a software instance that can be programmed to run arbitrary pieces of code that can implement, among others, the network functions F that compose the application. A suitable worker may be implemented in several well-known ways, and may leverage established techniques such as multitasking, real-time scheduling, virtualization, sandboxing, etc. When the system demand for a function becomes too high (e.g. as determined by an application-aware controller, either centralized or distributed), a worker from the pool is instantiated to become an instance of the desired function by loading the code from a code repository.

The code repository provides storage and retrieval of named / versioned pieces of code that implement the F network functions. Code is considered immutable, and the repository might implement version and configuration management techniques as widely adopted in the art.

The pool of resources M is also configured to host a number of system-wide services D that provide among others a set of unified facilities for global state storage. Network functions are designed to use one or more of the D state storage facilities in order to ensure global state sharing among all their instances with the required guarantees of consistency, mutual exclusion, fault tolerance, etc. The D services can run on a set of dedicated hardware resources or, in a preferred embodiment, as a second category of software programs that are executed by the pool of workers W.

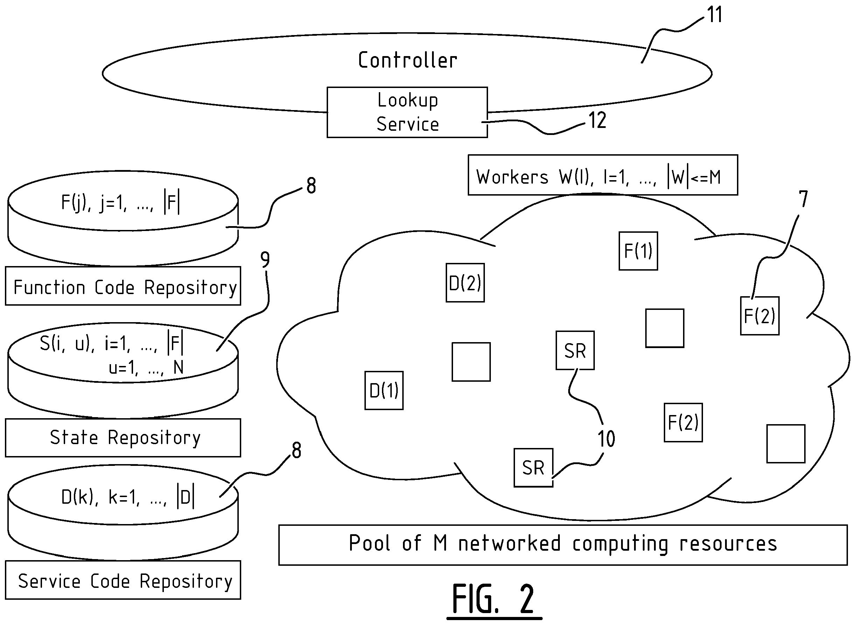

Figure 2 illustrate the logical components of the system. Workers 7, on the right, are represented as squares. Workers are programmable logic entities that run on networked computing resources, such as (virtualized) operating systems, OS shells, virtual machines, etc. A one-to-one relationship is assumed to exist between workers and resources, and we will assume that there are up to M workers in the system. Workers can exist in two states, notably un-instantiated (represented as an empty square) and instantiated (the filled squares) after the appropriate code from a repository has been executed on them. The picture shows instantiated workers executing function code (e.g., squares labeled F(1) and F(2)) and service code (labeled D(1), D(2), and SR).

Figure 2 further illustrates repositories 8, on the left, represented as filled cylinders. Repositories are storage facilities, which can be implemented with well-known technical means such as (distributed) file systems, (distributed) key-value stores, (distributed) memory databases, etc.

Special types of service code running on a worker include, for instance, the code implementing a network storage functionality, i.e. the State Repository 9 as a service running on initialized workers 10 or other network-wide services, such as the (distributed) controller function 11, the (distributed) lookup service 12, etc. The code for all services is contained in the 'service code repository' and deployed on-demand over the workers under the supervision of the controller.

Controller 11 maintains up-to-date state information about the deployment of workers and the state of availability of the computing resources. It may to this end perform measurements over the network (for bandwidth, latency, and other relevant quantities) and periodically query the worker nodes about their status. The information thus obtained, together with system / function / service specific knowledge, is used as the basis for deciding of the deployment of function and service code on the un-instantiated workers, or the termination and release of (a) specific instantiated worker(s). It can be implemented as a centralized or distributed system.

Lookup service 12 can be queried by the other functions or services to obtain the network address of other deployed functions and services over the M computing resources. It can be implemented as a centralized or distributed system (using well-known techniques e.g. distributed hash tables).

When deploying elastic P-CSCF and S-CSCF workers, the controller instantiates new worker instances F(1) and F(2) executing the appropriate code as retrieved from the function code repository. The controller may also instantiate workers D(1) and D(2) to execute one or more of the following services:
- a monitoring service to enable benchmarking and profiling the IMS workers as well as the employed system-wide services (such as the shared data-storage systems).
- a prediction service to forecast load surges (based on short-term call load predictions combined with history-based predictions to anticipate future load changes). This optional service enables to pro-actively provision IMS workers, which enables to reduce the amount of worker over-provisioning while limiting the risk of worker under-provisioning (which in turn may cause SLA violations and increases the risk of losing customers).
- an elasticity service implementing the feedback loop that is responsible for each type of IMS worker to (a) decide how many new workers to create, (b) which existing workers to release, and (c) how long to stay idle.
- a maintenance service providing access to the various operational IMS workers, for instance to drive an IMS worker to a safe execution state before being released.

In order to operate a scalable IMS service, a set of the abovementioned system-wide services can be introduced that can be used to provide elasticity and to improve the overall fault tolerance and load balancing properties of a running system.

To enable releasing workers immediately whenever needed, and to share load equally when adding new workers, the P-CSCF and S-CSCF workers retrieve and/or store the execution state from and/or on a shared storage system before and after processing a request/response that is related to or may affect the relevant global state(s). In figure 2, the deployment of redundant state repository workers SR is shown to service the P-CSCF and S-CSCF workers.

Finally, the IMS call functionality is operational, and can support the establishment of basic calls and other IMS telephony features.

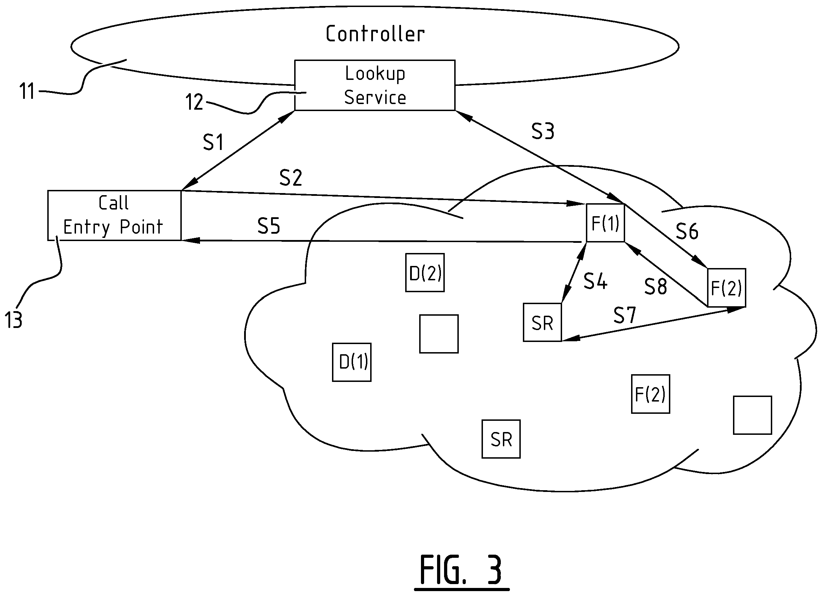

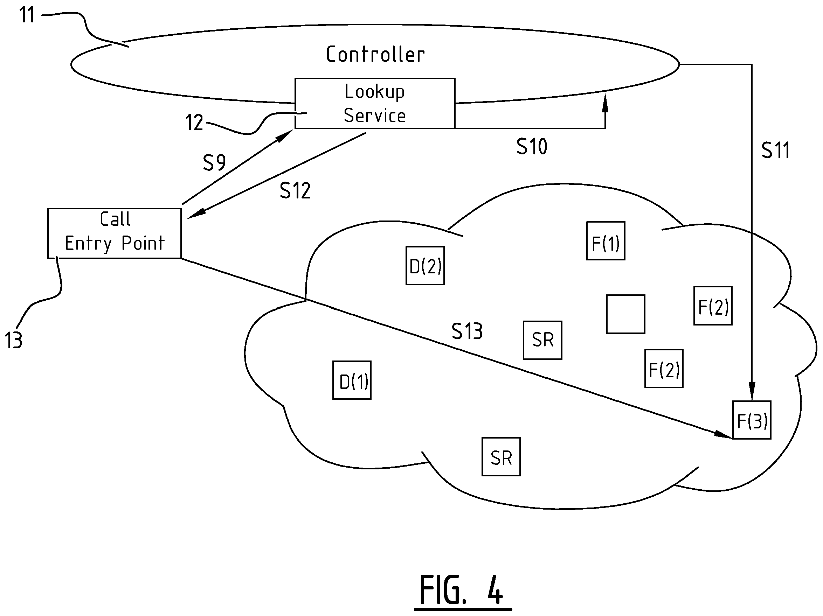

Figures 3 and 4 illustrate the underlying mechanisms that oversee the basic operation of the cloud-based IMS system, specifically the mechanisms that allow the creation and coordination of a multiplicity of workers in order to provide the desired standard IMS functionality.

Figure 3 shows the routing of a service demand to the appropriate function, for instance in the context of an execution of the call flow illustrated between UE 1 and UE 2 in figure 1. When a caller UE 1 initiates a session toward a receiver UE 2, a network message, such as a SIP message, reaches an entry point 13 to the IMS system that invokes the lookup service 12 in step S1 to find a P-CSCF worker F(1) that is capable to process its request. Next, in step S2, the message is forwarded to the P-CSCF function 3 embodied by F(1). In step S3, F(1) in turn accesses the lookup service 12 to find an instance of the state repository SR. In step S4, F(1) fetches and updates the relevant global state information about the active telephony sessions of caller UE 1. The state contained in the SR will allow the P-CSCF function F(1) to contact the address of the appropriate S-CSCF worker 5, embodied by worker F(2), that is capable to process the request, and furthermore to notify, in step S5, UE 1 of the progress of the call according to the IMS specifications and protocol state machines. After worker F(2) receives this request in step S6, it will, in step S7, in turn access the state stored in the SR and update it based on the instructions received from F(1) and on the relevant IMS protocols and state machines. It will contact F(1) in step S8, and possibly other IMS functions, such as HSS 6 and/or other P-CSCF functions, in order to eventually reach UE 2. At the end of the complete call setup procedure shown, a call may thus be established between UE 1 and UE 2.

Figure 4 illustrates the case in which the IMS system receives a new demand for a function previously not instantiated, e.g. a setup request for a new data bearer for video to be received by UE 1.

Entry point 13 invokes the lookup service 12 in step S9 to find a worker that provides a function that is currently not instantiated in the system and which is desired for the new data bearer. In such case, lookup service 12 cannot find a worker instance to process the request. In step S10, lookup service 12 instructs controller 11 to instantiate, in step S11, a new appropriate multimedia processing function F(3). Once the new worker F(3) is operational, the lookup service returns in step S12 the address of the F(3) function worker to the entry point 13, and the message from UE 1 is finally routed to F(3) in step S13. F(3) will then proceed with the appropriate flow execution by accessing the SR to retrieve as shown above the appropriate global state information about UE 1 and possibly the network addresses of other IMS network functions that it needs to contact, following the relevant IMS specifications and protocol state machines.

The present invention allows the instantiation of desired functions and/or services, thereby providing a flexible architecture that is able to adjust to the required computational resources. It provides a system which is able to instantiate new functions and services at the time that they are required. Therefore, computational resources do not have to be reserved ab initio.

With the addition of optional services, such as the elasticity service and monitoring service, functionality can be added to the system. More in particular, these services allow the IMS system to elastically increase or decrease depending on the required capability and/or load distribution. If the required capability is low, resources can be made available for other uses. This allows a more efficient management of computational resources than is possible with prior art systems.

It should be clear to skilled person that various embodiments can be made to the embodiments described here without departing from the scope of the invention which is defined by the appended claims.

## Claims

1. An Internet Protocol Multimedia Subsystem (IMS) system, comprising:
networked computing resources;
a service code repository for storing code for implementing at least one network service, wherein said at least one network service comprises a state repository service which offers storage of a global state corresponding to a network function;
a function code repository for storing code for implementing the network function, said network function being configured to use the state repository service to ensure global state sharing among instances of the same network function within the system;
a plurality of programmable logical entities that run on the networked computing resources, each of said entities being either in an un-instantiated state, or in an instantiated state after code from the function code repository or service code repository has been deployed on it;
a controller for maintaining a consistent view of the status of the instantiated logical entities and for determining a state of overall availability of the networked computing resources, said controller being further configured to deploy code from the function code repository and/or the service code repository on an un-instantiated programmable logical entity or to terminate and release an instantiated programmable logical entity;
wherein the system further comprises:
a monitoring unit having a monitoring service to enable benchmarking the instantiated programmable logical entities;
an elasticity unit having an elasticity service to use the controller to modify a number of instantiated logical entities pertaining to the network function and/or network service based on input from the monitoring unit regarding that network function and/or network service.

2. The IMS system according to claim 1, wherein the monitoring unit determines the load of a network function and/or network service, and wherein the elasticity unit is configured to modify the number of instantiated logical entities pertaining to the network function and/or network service when the load is outside a predetermined operating range.

3. The IMS system according to claim 2, wherein the elasticity unit is further configured to take into account the state of availability of the networked computing resources obtained from the controller for determining whether to modify said number of instantiated logical entities.

4. The IMS system according to any of the claims 1-3, wherein the service code repository comprises code for implementing the monitoring service and the elasticity service, and wherein the monitoring unit comprises an instantiation of the monitoring service on a programmable logical entity and wherein the elasticity unit comprises an instantiation of the elasticity service on a programmable logical entity.

5. The IMS system according to any of the claims 1-4, wherein the system further comprises a prediction unit having a prediction service to forecast load surges of the network function and/or network service, wherein the elasticity unit is configured to modify the number of instantiated logical entities pertaining to the network function and/or network service based on output of the prediction service.

6. The IMS system according to claim 5, wherein the service code repository comprises code for implementing the prediction service, and wherein the prediction unit is an instantiation of the prediction service on a programmable logical entity.

7. The IMS system according to any of the claims 1-6, wherein the function code repository and/or service code repository comprises code for a plurality of network functions and/or network services, respectively, and wherein the elasticity unit is configured to modify the number of the instantiated logical entities pertaining to each network function and/or network service individually based on input from the monitoring unit regarding that network function and/or network service.

8. The IMS system according to any of the previous claims, wherein the controller comprises a database having stored therein the name of a network function and/or network service, and a corresponding address and status for each instantiated logical entity on which said network function and/or network has been instantiated.

9. The IMS system according to claim 8, further comprising a lookup unit having a lookup service for allowing access to the database for other functions or services within the IMS system.

10. A method for elastically scaling an Internet Protocol Multimedia Subsystem (IMS) system, comprising:
providing networked computing resources;
storing code for implementing at least one network service in a service code repository, wherein said at least one network service comprises a state repository service which offers storage of a global state corresponding to a network function;
storing code for implementing at least one network function in a function code repository, said network function being configured to use the state repository service to ensure global state sharing among instances of the same network function within the system;
providing a plurality of programmable logical entities that run on the networked computing resources, each of said entities being either in an un-instantiated state, or in an instantiated state after code from the function code repository or service code repository has been deployed on it;
maintaining a consistent view of the status of the instantiated logical entities and determining a state of overall availability of the networked computing resources;
modifying a number of instantiated logical entities pertaining to the network function and/or network service by deploying code from the function code repository and/or the service code repository on an un-instantiated programmable logical entity or to terminate and release an instantiated programmable logical entity;
the method further comprising:
benchmarking the instantiated programmable logical entities;
wherein said modifying a number of instantiated logical entities pertaining to the network function and/or network service is based on said benchmarking regarding that network function and/or network service.

11. The method according to claim 10, further comprising determining the load of the network function and/or network service, wherein said modifying comprising modifying the number of instantiated logical entities pertaining to the network function and/or network service when the load is outside a predetermined operating range.

12. The method according to claim 10 or 11, further comprising taking into account the state of availability of the networked computing resources for determining whether to modify said number of instantiated logical entities.

13. The method according to any of the claims 10-12, further comprising forecasting load surges of the network function and/or network service, said modifying comprising modifying the number of instantiated logical entities pertaining to the network function and/or network service also based on output of the prediction service.

14. The method according to any of the claims 10-13, wherein the function code repository and/or service code repository comprises code for a plurality of network functions and/or network services, respectively, said modifying comprising modifying a number of instantiated logical entities pertaining to each network function and/or network service individually based on benchmarking that network function and/or network service.

15. An Internet Protocol Multimedia Subsystem (IMS) system package, comprising a computer-readable storage medium, said medium comprising code to be deployed on a plurality of programmable logical entities that run on networked computing resources, each of said entities being either in an un-instantiated state, or in an instantiated state after code has been deployed on it, the storage medium comprising:
code for implementing at least one network service, wherein said at least one network service comprises a state repository service which offers storage of a global state corresponding to a network function;
code for implementing the network function, said network function being configured to use the state repository service to ensure global state sharing among instances of the same network function within the system;
code for implementing a controller service for maintaining a consistent view of the status of instantiated logical entities and for determining a state of overall availability of the networked computing resources, said controller service being further configured to deploy code from the function code repository and/or the service code repository on an un-instantiated programmable logical entity or to terminate and release an instantiated programmable logical entity;
the Internet Protocol Multimedia Subsystem (IMS) system package further comprising code for implementing a monitoring service to enable benchmarking the instantiated programmable logical entities, and code for implementing an elasticity service that is configured to use the controller service to modify a number of instantiated logical entities pertaining to the network function and/or network service based on input from the monitoring unit regarding that network function and/or network service.

16. The Internet Protocol Multimedia Subsystem (IMS) system package according to claim 15, further comprising code for implementing a prediction service to forecast load surges of the network function and/or network service, wherein the elasticity service is configured to modify the number of instantiated logical entities pertaining to the network function and/or network service based on output of the prediction service.

## Patentansprüche

1. Internet Protocol Multimedia Subsystem (IMS)-System, umfassend:
vernetzte Rechenressourcen;
eine Dienstcodeablage zur Codespeicherung für die Implementierung von mindestens einem Netzwerkdienst, wobei der besagte mindestens eine Netzwerkdienst einen Statusablagedienst umfasst, der das Speichern eines globalen Status entsprechend einer Netzwerkfunktion bietet;
eine Funktionscodeablage zur Codespeicherung für die Implementierung der Netzwerkfunktion, wobei die besagte Netzwerkfunktion konfiguriert ist, den Statusablagedienst zu verwenden, um globales Statusteilen unter Instanzen der gleichen Netzwerkfunktion innerhalb des Systems sicherzustellen;
eine Vielzahl von programmierbaren Logikentitäten, die auf den vernetzten Rechenressourcen laufen, wobei jede der besagten Entitäten entweder in einem nicht-instanziierten Status oder in einem instanziierten Status ist, nachdem ein Code aus der Funktionscodeablage oder Dienstcodeablage darauf angewendet wurde;
einen Controller zum Aufrechterhalten einer konsistenten Statusansicht der instanziierten Logikentitäten und zum Bestimmen eines Status einer Gesamtverfügbarkeit der vernetzten Rechenressourcen, wobei der besagte Controller weiterhin konfiguriert ist, einen Code aus der Funktionscodeablage und/oder der Dienstcodeablage auf eine nicht-instanziierte programmierbare Logikentität anzuwenden oder eine instanziierte programmierbare Logikentität abzuschließen und freizugeben;
wobei das System weiterhin umfasst:
eine Überwachungseinheit mit einem Überwachungsdienst, um ein Benchmarking der instanziierten programmierbaren Logikentitäten zu ermöglichen;
eine Elastizitätseinheit mit einem Elastizitätsdienst zum Verwenden des Controllers, um eine Anzahl von instanziierten Logikentitäten zu ändern, die zu der Netzwerkfunktion und/oder dem Netzwerkdienst gehören, basierend auf einer Eingabe von der Überwachungseinheit betreffend dieser Netzwerkfunktion und/oder diesem Netzwerkdienst.

2. IMS-System nach Anspruch 1, wobei die Überwachungseinheit die Last einer Netzwerkfunktion und/oder eines Netzwerkdienstes bestimmt, und wobei die Elastizitätseinheit konfiguriert ist, die Anzahl von instanziierten Logikentitäten zu ändern, die zu der Netzwerkfunktion und/oder dem Netzwerkdienst gehören, wenn die Last außerhalb eines vorbestimmten Betriebsbereiches liegt.

3. IMS-System nach Anspruch 2, wobei die Elastizitätseinheit weiterhin konfiguriert ist, den von dem Controller erhaltenen Verfügbarkeitsstatus der vernetzten Rechenressourcen zu berücksichtigen, um zu bestimmen, ob die besagte Anzahl von instanziierten Logikentitäten zu ändern ist.

4. IMS-System nach einem beliebigen der Ansprüche 1-3, wobei die Dienstcodeablage einen Code für die Implementierung des Überwachungsdienstes und des Elastizitätsdienstes umfasst, und wobei die Überwachungseinheit eine Instanziierung des Überwachungsdienstes auf einer programmierbaren Logikentität umfasst und wobei die Elastizitätseinheit eine Instanziierung des Elastizitätsdienstes auf einer programmierbaren Logikentität umfasst.

5. IMS-System nach einem beliebigen der Ansprüche 1-4, wobei das System weiterhin eine Vorhersageeinheit mit einem Vorhersagedienst zum Voraussagen von Lastschüben der Netzwerkfunktion und/oder des Netzwerkdienstes umfasst, wobei die Elastizitätseinheit konfiguriert ist, die Anzahl von instanziierten Logikentitäten zu ändern, die zu der Netzwerkfunktion und/oder dem Netzwerkdienst gehören, basierend auf einer Ausgabe des Vorhersagedienstes.

6. IMS-System nach Anspruch 5, wobei die Dienstcodeablage einen Code für die Implementierung des Vorhersagedienstes umfasst, und wobei die Vorhersageeinheit eine Instanziierung des Vorhersagedienstes auf einer programmierbaren Logikentität ist.

7. IMS-System nach einem beliebigen der Ansprüche 1-6, wobei die Funktionscodeablage und/oder Dienstcodeablage jeweils einen Code für eine Vielzahl von Netzwerkfunktionen und/oder Netzwerkdiensten umfasst, und wobei die Elastizitätseinheit konfiguriert ist, die Anzahl von instanziierten Logikentitäten zu ändern, die zu jeder Netzwerkfunktion und/oder jedem Netzwerkdienst gehören, individuell basierend auf einer Eingabe von der Überwachungseinheit betreffend dieser Netzwerkfunktion und/oder diesem Netzwerkdienst.

8. IMS-System nach einem beliebigen der vorstehenden Ansprüche, wobei der Controller eine Datenbank umfasst, die darin gespeichert den Namen einer Netzwerkfunktion und/oder eines Netzwerkdienstes, und eine entsprechende Adresse und einen Status für jede instanziierte Logikentität aufweist, auf der die besagte Netzwerkfunktion und/oder der Netzwerkdienst instanziiert wurde.

9. IMS-System nach Anspruch 8, weiterhin umfassend eine Look-Up-Einheit mit einem Look-Up-Dienst, um den Zugang zu der Datenbank für andere Funktionen oder Dienste innerhalb des IMS-Systems zuzulassen.

10. Verfahren zum elastischen Skalieren eines Internet Protocol Multimedia Subsystem (IMS)-Systems, umfassend:
Bereitstellen vernetzter Rechenressourcen;
Codespeicherung für die Implementierung von mindestens einem Netzwerkdienst in einer Dienstcodeablage, wobei der besagte mindestens eine Netzwerkdienst einen Statusablagedienst umfasst, der das Speichern eines globalen Status entsprechend einer Netzwerkfunktion bietet;
Codespeicherung für die Implementierung von mindestens einer Netzwerkfunktion in einer Funktionscodeablage, wobei die besagte Netzwerkfunktion konfiguriert ist, den Statusablagedienst zu verwenden, um globales Statusteilen unter Instanzen der gleichen Netzwerkfunktion innerhalb des Systems sicherzustellen;
Bereitstellen einer Vielzahl von programmierbaren Logikentitäten, die auf den vernetzten Rechenressourcen laufen, wobei jede der besagten Entitäten entweder in einem nicht-instanziierten Status oder in einem instanziierten Status ist, nachdem ein Code aus der Funktionscodeablage oder Dienstcodeablage darauf angewendet wurde;
Aufrechterhalten einer konsistenten Statusansicht der instanziierten Logikentitäten und Bestimmen eines Status einer Gesamtverfügbarkeit der vernetzten Rechenressourcen;
Ändern einer Anzahl von instanziierten Logikentitäten, die zu der Netzwerkfunktion und/oder dem Netzwerkdienst gehören, durch Anwenden eines Codes aus der Funktionscodeablage und/oder der Dienstcodeablage auf eine nicht-instanziierte programmierbare Logikentität, oder um eine instanziierte programmierbare Logikentität abzuschließen und freizugeben;
wobei das Verfahren weiterhin umfasst:
Benchmarking der instanziierten programmierbaren Logikentitäten;
wobei das besagte Ändern einer Anzahl von instanziierten Logikentitäten, die zu der Netzwerkfunktion und/oder dem Netzwerkdienst gehören, auf dem besagten Benchmarking betreffend dieser Netzwerkfunktion und/oder diesem Netzwerkdienst basiert.

11. Verfahren nach Anspruch 10, weiterhin umfassend das Bestimmen der Last der Netzwerkfunktion und/oder des Netzwerkdienstes, wobei das besagte Ändern das Ändern der Anzahl von instanziierten Logikentitäten umfasst, die zu der Netzwerkfunktion und/oder dem Netzwerkdienst gehören, wenn die Last außerhalb eines vorbestimmten Betriebsbereiches liegt.

12. Verfahren nach Anspruch 10 oder 11, weiterhin umfassend das Berücksichtigen des Verfügbarkeitsstatus der vernetzten Rechenressourcen, um zu bestimmen, ob die besagte Anzahl von instanziierten Logikentitäten zu ändern ist.

13. Verfahren nach einem beliebigen der Ansprüche 10-12, weiterhin umfassend das Voraussagen von Lastschüben der Netzwerkfunktion und/oder des Netzwerkdienstes, wobei das besagte Ändern das Ändern der Anzahl von instanziierten Logikentitäten umfasst, die zu der Netzwerkfunktion und/oder dem Netzwerkdienst gehören, ebenfalls basierend auf einer Ausgabe des Vorhersagedienstes.

14. Verfahren nach einem beliebigen der Ansprüche 10-13, wobei die Funktionscodeablage und/oder Dienstcodeablage jeweils einen Code für eine Vielzahl von Netzwerkfunktionen und/oder Netzwerkdiensten umfassen, wobei das besagte Ändern das Ändern einer Anzahl von instanziierten Logikentitäten umfasst, die zu jeder Netzwerkfunktion und/oder jedem Netzwerkdienst gehören, individuell basierend auf einem Benchmarking dieser Netzwerkfunktion und/oder dieses Netzwerkdienstes.

15. Internet Protocol Multimedia Subsystem (IMS)-Systempaket, umfassend ein computerlesbares Speichermedium, wobei das besagte Medium einen Code umfasst, der auf eine Vielzahl von programmierbaren Logikentitäten anzuwenden ist, die auf vernetzten Rechenressourcen laufen, wobei jede der besagten Entitäten entweder in einem nicht-instanziierten Status oder in einem instanziierten Status ist, nachdem ein Code darauf angewendet wurde, wobei das Speichermedium umfasst:
Code für die Implementierung von mindestens einem Netzwerkdienst, wobei der besagte mindestens eine Netzwerkdienst einen Statusablagedienst umfasst, der das Speichern eines globalen Status entsprechend einer Netzwerkfunktion bietet;
Code für die Implementierung der Netzwerkfunktion, wobei die besagte Netzwerkfunktion konfiguriert ist, den Statusablagedienst zu verwenden, um globales Statusteilen unter Instanzen der gleichen Netzwerkfunktion innerhalb des Systems sicherzustellen;
Code für die Implementierung eines Controllerdienstes zum Aufrechterhalten einer konsistenten Statusansicht von instanziierten Logikentitäten und zum Bestimmen eines Status einer Gesamtverfügbarkeit der vernetzten Rechenressourcen, wobei der besagte Controllerdienst weiterhin konfiguriert ist, einen Code aus der Funktionscodeablage und/oder der Dienstcodeablage auf eine nicht-instanziierte programmierbare Logikentität anzuwenden oder eine instanziierte programmierbare Logikentität abzuschließen und freizugeben;
wobei das Internet Protocol Multimedia Subsystem (IMS)-Systempaket weiterhin einen Code für die Implementierung eines Überwachungsdienstes umfasst, um ein Benchmarking der instanziierten programmierbaren Logikentitäten zu ermöglichen, und einen Code für die Implementierung eines Elastizitätsdienstes, der konfiguriert ist, den Controllerdienst zu verwenden, um eine Anzahl von instanziierten Logikentitäten zu ändern, die zu der Netzwerkfunktion und/oder dem Netzwerkdienst gehören, basierend auf einer Eingabe von der Überwachungseinheit betreffend dieser Netzwerkfunktion und/oder diesem Netzwerkdienst.

16. Internet Protocol Multimedia Subsystem (IMS)-Systempaket nach Anspruch 15, weiterhin umfassend einen Code für die Implementierung eines Vorhersagedienstes zum Voraussagen von Lastschüben der Netzwerkfunktion und/oder des Netzwerkdienstes, wobei der Elastizitätsdienst konfiguriert ist, die Anzahl von instanziierten Logikentitäten zu ändern, die zu der Netzwerkfunktion und/oder dem Netzwerkdienst gehören, basierend auf einer Ausgabe des Vorhersagedienstes.

## Revendications

1. Système à sous-système multimédia de protocole Internet (IMS), comprenant :
des ressources informatiques en réseau ;
un référentiel de codes de service pour stocker un code pour mettre en oeuvre au moins un service réseau, dans lequel ledit au moins un service réseau comprend un service de référentiel d'états qui permet le stockage d'un état global correspondant à une fonction réseau ;
un référentiel de codes de fonction pour stocker un code pour mettre en oeuvre la fonction réseau, ladite fonction réseau étant configurée pour utiliser le service de référentiel d'états pour garantir un partage d'état global parmi des instances de la même fonction réseau dans le système ;
une pluralité d'entités logiques programmables qui sont exécutées sur les ressources informatiques en réseau, chacune desdites entités étant dans un état non instancié ou dans un état instancié après que le code du référentiel de codes de fonction ou du référentiel de codes de service a été déployé sur celles-ci ;
un contrôleur pour maintenir un affichage constant de l'état des entités logiques instanciées et pour déterminer un état de disponibilité globale des ressources informatiques en réseau, ledit contrôleur étant en outre configuré pour déployer un code du référentiel de codes de fonction et/ou du référentiel de codes de service sur une entité logique programmable non instanciée ou pour interrompre et libérer une entité logique programmable instanciée ;
le système comprenant en outre :
une unité de surveillance ayant un service de surveillance pour permettre un test de performance des entités logiques programmables instanciées ;
une unité élastique ayant un service élastique pour utiliser le contrôleur afin de modifier un certain nombre d'entités logiques instanciées se rapportant à la fonction réseau et/ou au service réseau sur la base d'une entrée de l'unité de surveillance concernant cette fonction réseau et/ou ce service réseau.

2. Système IMS selon la revendication 1, dans lequel l'unité de surveillance détermine la charge d'une fonction réseau et/ou d'un service réseau, et dans lequel l'unité élastique est configurée pour modifier le nombre d'entités logiques instanciées se rapportant à la fonction réseau et/ou au service réseau lorsque la charge est en dehors d'une plage de fonctionnement prédéterminée.

3. Système IMS selon la revendication 2, dans lequel l'unité élastique est en outre configurée pour tenir compte de l'état de disponibilité des ressources informatiques en réseau obtenues par le contrôleur pour déterminer s'il faut modifier ou non ledit nombre d'entités logiques instanciées.

4. Système IMS selon l'une quelconque des revendications 1 à 3, dans lequel le référentiel de codes de service comprend un code pour mettre en oeuvre le service de surveillance et le service élastique, et dans lequel l'unité de surveillance comprend une instanciation du service de surveillance sur une entité logique programmable et dans lequel l'unité élastique comprend une instanciation du service élastique sur une entité logique programmable.

5. Système IMS selon l'une quelconque des revendications 1 à 4, le système comprenant en outre une unité de prévision ayant un service de prévision pour prévoir des à-coups de charge de la fonction réseau et/ou du service réseau, dans lequel l'unité élastique est configurée pour modifier le nombre d'entités logiques instanciées se rapportant à la fonction réseau et/ou au service réseau sur la base d'une sortie du service de prévision.

6. Système IMS selon la revendication 5, dans lequel le référentiel de codes de service comprend un code pour mettre en oeuvre le service de prévision, et dans lequel l'unité de prévision est une instanciation du service de prévision sur une entité logique programmable.

7. Système IMS selon l'une quelconque des revendications 1 à 6, dans lequel le référentiel de codes de fonction et/ou le référentiel de codes de service comprend un code pour une pluralité de fonctions réseau et/ou de services réseau, respectivement, et dans lequel l'unité élastique est configurée pour modifier le nombre des entités logiques instanciées se rapportant à chaque fonction réseau et/ou service réseau individuellement sur la base d'une entrée de l'unité de surveillance concernant cette fonction réseau et/ou ce service réseau.

8. Système IMS selon l'une quelconque des revendications précédentes, dans lequel le contrôleur comprend une base de données stockant le nom d'une fonction réseau et/ou d'un service réseau, et une adresse et un état correspondants pour chaque entité logique instanciée sur laquelle ladite fonction réseau et/ou ledit réseau a été instancié.

9. Système IMS selon la revendication 8, comprenant en outre une unité de consultation ayant un service de consultation pour autoriser l'accès à la base de données à d'autres fonctions ou services dans le système IMS.

10. Procédé de mise à l'échelle élastique d'un système à sous-système multimédia de protocole Internet (IMS), comprenant les étapes suivantes :
fournir des ressources informatiques en réseau ;
stocker un code pour mettre en oeuvre au moins un service réseau dans un référentiel de codes de service, dans lequel ledit au moins un service réseau comprend un service de référentiel d'états qui permet le stockage d'un état global correspondant à une fonction réseau ;
stocker un code pour mettre en oeuvre au moins une fonction réseau dans un référentiel de codes de fonction, ladite fonction réseau étant configurée pour utiliser le service de référentiel d'états pour garantir un partage d'état global parmi des instances de la même fonction réseau dans le système ;
fournir une pluralité d'entités logiques programmables qui sont exécutées sur les ressources informatiques en réseau, chacune desdites entités étant dans un état non instancié ou dans un état instancié après que le code du référentiel de codes de fonction ou du référentiel de codes de service a été déployé sur celles-ci ;
maintenir un affichage constant de l'état des entités logiques instanciées et déterminer un état de disponibilité globale des ressources informatiques en réseau ;
modifier un certain nombre d'entités logiques instanciées se rapportant à la fonction réseau et/ou au service réseau en déployant un code du référentiel de codes de fonction et/ou du référentiel de codes de service sur une entité logique programmable non instanciée ou en interrompant et en libérant une entité logique programmable instanciée ;
le procédé comprenant en outre l'étape suivante :
tester les performances des entités logiques programmables instanciées ;
dans lequel ladite modification d'un certain nombre d'entités logiques instanciées se rapportant à la fonction réseau et/ou au service réseau est basée sur ledit test de performance concernant cette fonction réseau et/ou ce service réseau.

11. Procédé selon la revendication 10, comprenant en outre la détermination de la charge de la fonction réseau et/ou du service réseau, dans lequel ladite modification comprend la modification du nombre d'entités logiques instanciées se rapportant à la fonction réseau et/ou au service réseau lorsque la charge est en dehors d'une plage de fonctionnement prédéterminée.

12. Procédé selon la revendication 10 ou 11, comprenant en outre la prise en compte de l'état de disponibilité des ressources informatiques en réseau pour déterminer s'il faut modifier ou non ledit nombre d'entités logiques instanciées.

13. Procédé selon l'une quelconque des revendications 10 à 12, comprenant en outre la prévision d'à-coups de charge de la fonction réseau et/ou du service réseau, ladite modification comprenant la modification du nombre d'entités logiques instanciées se rapportant à la fonction réseau et/ou au service réseau également sur la base d'une sortie du service de prévision.

14. Procédé selon l'une quelconque des revendications 10 à 13, dans lequel le référentiel de codes de fonction et/ou le référentiel de codes de service comprend un code pour une pluralité de fonctions réseau et/ou de services réseau, respectivement, ladite modification comprenant la modification d'un nombre d'entités logiques instanciées se rapportant à chaque fonction réseau et/ou service réseau individuellement sur la base d'un test de performance de cette fonction réseau et/ou de ce service réseau.

15. Boîtier-système à sous-système multimédia de protocole Internet (IMS), comprenant un support de stockage lisible par ordinateur, ledit support comprenant un code à déployer sur une pluralité d'entités logiques programmables qui sont exécutées sur des ressources informatiques en réseau, chacune desdites entités étant dans un état non instancié ou dans un état instancié après que le code a été déployé sur celles-ci, le support de stockage comprenant :
un code pour mettre en oeuvre au moins un service réseau, dans lequel ledit au moins un service réseau comprend un service de référentiel d'états qui permet le stockage d'un état global correspondant à une fonction réseau ;
un code pour mettre en oeuvre la fonction réseau, ladite fonction réseau étant configurée pour utiliser le service de référentiel d'états pour garantir un partage d'état global parmi des instances de la même fonction réseau dans le système ;
un code pour mettre en oeuvre un service de contrôleur pour maintenir un affichage constant de l'état des entités logiques instanciées et pour déterminer un état de disponibilité globale des ressources informatiques en réseau, ledit service de contrôleur étant en outre configuré pour déployer un code du référentiel de codes de fonction et/ou du référentiel de codes de service sur une entité logique programmable non instanciée ou pour interrompre et libérer une entité logique programmable instanciée ;
le boîtier-système à sous-système multimédia de protocole Internet (IMS) comprenant en outre un code pour mettre en oeuvre un service de surveillance afin de permettre un test de performance des entités logiques programmables instanciées, et un code pour mettre en oeuvre un service élastique qui est configuré pour utiliser le service de contrôleur afin de modifier un certain nombre d'entités logiques instanciées se rapportant à la fonction réseau et/ou au service réseau sur la base d'une entrée de l'unité de surveillance concernant cette fonction réseau et/ou ce service réseau.

16. Boîtier-système à sous-système multimédia de protocole Internet (IMS) selon la revendication 15, comprenant en outre un code pour mettre en oeuvre un service de prévision pour prévoir des à-coups de charge de la fonction réseau et/ou du service réseau, dans lequel le service élastique est configuré pour modifier le nombre d'entités logiques instanciées se rapportant à la fonction réseau et/ou au service réseau sur la base d'une sortie du service de prévision.
